# DEMANDE DE BREVET EUROPEEN

(11) **EP 3 640 891 A1**
(43) Date de publication de la demande: **22.04.2020**
(21) Numéro de dépôt: 19201344.9
(22) Date de dépôt: 03.10.2019
(51) Int. Cl.: G06T 7/40

(54) **ANALYSE RAPIDE D'IMAGES**

(30) Priorité: 18.10.2018 FR 1801094
(71) Demandeur: Thales, 92400 Courbevoie (FR)
(72) Inventeur: NOUVEL, Christian, 33700 MERIGNAC (FR); ELLERO, Sébastien, 33600 PESSAC (FR)
(74) Mandataire: Lucas, Laurent Jacques

(57) **Abrégé**

L'invention concerne des systèmes et des procédés d'analyse rapide d'image(s), particulièrement utiles dans des contextes avioniques. Un procédé spécifique décrit des étapes de calcul de complexité algorithmique et/ou de profondeur logique, de manière à catégoriser rapidement des objets, comprenant des images et/ou des points d'intérêts déterminés dans ces images, selon des niveaux discrets de structuration, d'organisation ou d'ordre. Des traitements d'images complexes peuvent ensuite porter sur des sous-parties restreintes des images. Les calculs de complexité ou de profondeur logique peuvent par exemple comprendre des étapes consistant à compresser *sans pertes* ligne par ligne et/ou colonne par colonne lesdits objets, à déterminer des distributions statistiques des taux de compression de ces objets, à déterminer un ou plusieurs scores en fonction des taux de compression ou de moments statistiques et à catégoriser localement ou globalement une ou plusieurs images reçues. Des développements décrivent des aspects de système et de logiciel.

## Description

### Domaine technique

L'invention concerne le domaine de la gestion de mission aéronautique en général. L'invention concerne en particulier le traitement d'images pour la détection rapide d'objets connus.

### Etat de la technique

Certaines phases de vol d'un aéronef peuvent être particulièrement critiques. Par exemple, il existe des risques de collision lors des phases de roulage. Il peut y avoir des pannes lors du décollage ou des dangers particuliers dus à l'environnement géographique (e.g. montagnes). Différentes procédures d'atterrissage ou d'approches présentent quant à elles des risques spécifiques (notamment de pannes, en cas de trafic important, quant au respect de procédures parfois complexes). Les phases de vol à basse altitude sont également dangereuses, par principe.

Durant les phases critiques, l'équipage doit respecter des procédures et des règlements prédéfinis (ce qui induit une charge de travail importante), dans le même temps effectuer une conduite de trajectoire *sûre* quelle que soit les conditions météorologiques (même dégradées), et par suite doit anticiper le plus tôt possible des situations potentiellement dangereuses (par exemple des risques de collisions).

Par le passé, beaucoup de situations étaient résolues à vue par l'équipage, mobilisant son expérience et en utilisant des instruments rudimentaires (montre, boussole).

A notre époque, l'instrumentation a considérablement évolué et nombre de systèmes d'assistance au pilote sont développés, par exemple sous forme d' « *Enhanced Vision Systems »* (acronyme EVS), de « *Synthetic Vision Systems »* (acronyme SVS) et de « *Combined Vision Systems* » (acronyme CVS). Ces systèmes EVS, SVS et CVS sont généralement complexes à mettre en œuvre, en particulier quant aux algorithmes à implémenter (e.g. puissance requise des processeurs, complexité des interfaces graphiques et prise en compte du temps réel).

Aujourd'hui, les solutions mises en œuvre dans les aéronefs modernes, aussi sophistiquées soient elles, reposent *in fine* sur la prise de décision humaine.

Un système EVS par exemple lit des informations fournies par un capteur 2D (par exemple une caméra infrarouge) puis améliore le contraste global de l'image (e.g. avec des techniques de filtrage linéaires et/ou non linéaires classiques). Certains types de contours pertinents sont recherchés (e.g. lignes droites, cercles). Le cas échéant, une présentation améliorée des images est préparée (par exemple fausses couleurs pour certains pixels, rajout de contours, amélioration du contraste, etc). L'image résultante est présentée au pilote. Il est donc fait appel à l'intelligence humaine pour interpréter les images. Malheureusement, il se trouve que lorsque ces images sont fortement bruitées, il peut être très difficile, voire impossible, de les interpréter. La machine ne parvient pas à aider l'homme de manière satisfaisante.

Un système CVS utilise lui plusieurs types de capteurs afin de combiner leurs informations. Ce genre de système cherche généralement à diminuer le bruit et/ou à maximiser les informations utiles. Les traitements de données sont alors généralement complexes et lourds en termes de temps ou de puissance de calcul (complexité plus sémantique). Plusieurs types de capteurs sont combinés afin de minimiser le bruit et de maximiser les informations exploitables. Dans un premier temps, les signaux sont acquis par un ensemble de capteurs variés (caméras infrarouges, radars, etc). Puis dans une étape suivante, les images sont formées et analysées sur un plan statistique (rehaussement de contrastes, etc). Ces images sont enfin découpées en régions ou zones (contours, points d'intérêts, etc). Dans chacune de ces régions, des objets connus prédéfinis sont recherchés (par exemple à l'aide de modèles paramétriques). Les différentes détections réalisées dans les régions d'image sont par la suite fusionnées, corrélées ou associées à des objets physiques (contrôle de redondance, détection de contradictions, détermination de certitudes, observations et analyse des topologies, etc). Ensuite, les informations sont interprétées et synthétisées en fonction des certitudes déterminées. Enfin, les informations résultantes sont présentées au pilote de manière « synthétique » (fonction de type SVS). Cette approche fait une fois encore appel à l'intelligence humaine pour interpréter les données (mais qui sont par construction plus « faciles » à comprendre). Il n'est en particulier plus besoin de présenter les images initiales fournies par les capteurs.

De manière générale, la littérature scientifique traitant de l'analyse du contenu des images est fournie. Malgré les progrès récents en matière d'apprentissage, notamment profond, le sujet reste délicat et les problèmes techniques qui se posent sont nombreux.

En avionique, il demeure un besoin industriel et opérationnel pour des procédés et des systèmes avancés pour la détection rapide d'objets connus.

### Résumé de l'invention

L'invention concerne des systèmes et des procédés d'analyse rapide d'image(s), particulièrement utiles dans des contextes avioniques. Un procédé spécifique décrit des étapes de calcul de complexité algorithmique et/ou de profondeur logique, de manière à catégoriser rapidement des objets, comprenant des images et/ou des points d'intérêts déterminés dans ces images, selon des niveaux discrets de structuration, d'organisation ou d'ordre. Des traitements d'images complexes peuvent ensuite porter sur des sous-parties restreintes des images. Les calculs de complexité ou de profondeur logique peuvent par exemple comprendre des étapes consistant à compresser *sans pertes* ligne par ligne et/ou colonne par colonne lesdits objets, à déterminer des distributions statistiques des taux de compression de ces objets, à déterminer un ou plusieurs scores en fonction des taux de compression ou de moments statistiques et à catégoriser localement ou globalement une ou plusieurs images reçues. Des développements décrivent des aspects de système et de logiciel.

Avantageusement, l'invention exploite le fait que toute construction humaine obéit à des règles de conception, structurelles, géométriques, mathématiques. Par suite, en associant des mesures effectuées sur ces constructions humaines à l'aide de capteurs, les chiffres recueillis ne sont pas purement aléatoires (comme du bruit blanc par exemple) et un «certain ordre» peut être détecté. Plus généralement, l'invention peut être utilisée pour discriminer des ordonnancements variables dans la nature. Le vivant (i.e. formes hors réalisations humaines) présente des structures complexes mais des degrés d'ordre également détectables et discriminables (e.g. un oiseau dans un arbre présente une structure qui est ordonnée au moins différemment des feuilles de l'arbre).

Avantageusement, l'invention s'implémentant au moyen d'algorithmes courts et rapides, le temps de réaction est minimisé et l'attention du pilote peut être attirée sur des objets que la machine traite de manière plus rapide. Plus spécifiquement, l'invention permet avantageusement de focaliser rapidement les calculs, i.e. de lancer des calculs plus complexes sur des sous-parties réduites et pertinentes de l'image. Et ceci, sans utiliser de calculs lourds (e.g. de grandes bases de données d'objets analysées a priori pour faire de la comparaison en temps réel sur les mesures avec des techniques de type apprentissage automatique).

Avantageusement, l'invention permet de déterminer de manière probabiliste la présence d'objets pertinents, lesquels peuvent par suite être suivis et/ou surveillés (sans être encore capable de les reconnaitre avec certitude).

Avantageusement, les systèmes et procédés selon l'invention sont indépendants des types de capteurs utilisés (ils peuvent être du type actif et/ou passif). En effet, l'invention s'appuie sur les caractéristiques (plus ou moins) aléatoires des données fournies par les capteurs.

L'invention permet avantageusement de relier le monde des systèmes EVS (qui utilisent des capteurs d'informations passifs et/ou actifs, e.g. des caméras infrarouge, U.V., des radars, des lasers) à celui des systèmes CVS (qui effectuent de la fusion de données dans un contexte multimodal). L'invention peut permettre d'aider le pilote à mieux comprendre son environnement, et par suite à mieux le maîtriser. En particulier, l'invention peut permettre l'équipage à anticiper de manière très précoce par exemple en amont d'un système CVS dans la phase d'analyse de chaque image reçue. Elle permet - malgré la présence d'une image bruitée - de fournir quand même des informations utiles au pilote pour attirer son attention.

Avantageusement, cette détection peut en effet se faire malgré des informations (e.g. 2D) très bruitées (avantage de la machine, ces informations étant difficilement ou non interprétables par un pilote humain). En effet, des informations très bruitées peuvent être analysées rapidement, selon une perspective de complexité algorithmique. Parmi ces informations, les procédés selon l'invention permettent d'anticiper, de préparer, d'optimiser ou au contraire de prévenir le lancement de calculs lourds (e.g. traitements d'images sophistiqués), ceci afin de gagner en performances temps réel et/ou en capacité de détecter plus tôt un ou plusieurs objets pertinents.

Avantageusement, l'invention permet de fournir au pilote des alertes concernant des secteurs géographiques particuliers à surveiller. Dans certains modes de réalisation, l'invention peut notamment permettre de lancer des calculs automatiques plus approfondis sur certains objets associés à ces secteurs géographiques à surveiller.

Avantageusement, le procédé selon l'invention peut être utilisé dans d'autres domaines que l'aéronautique, par exemple pour la détection d'incendie accompagné de fumées ou de brouillard (e.g. pour l'exploration de certaines zones prioritairement à d'autres, alors que la signification précise des zones n'est pas encore déterminée). De manière similaire, le procédé selon l'invention peut être utilisé dans le domaine de la conduite automobile.

Avantageusement, les modes de réalisation peuvent améliorer la « visibilité », i.e. la vision du pilote, e.g. détecter de manière précoce un véhicule en travers de la piste dans le brouillard ou des débris sur la piste (additionnellement à des systèmes de détection dédiés). La sûreté aéronautique est améliorée.

### Description des figures

Différents aspects et avantages de l'invention vont apparaitre en appui de la description d'un mode préféré d'implémentation de l'invention mais non limitatif, avec référence aux figures ci-dessous :
La figure 1 est une description de l'architecture générale du système selon l'invention ;
La figure 2 montre des exemples d'étapes du procédé selon l'invention ;
La figure 3 montre un exemple de calculs de points d'intérêts sur une première image bruitée fournie par un capteur infrarouge (en niveaux de gris).
La figure 4 montre une seconde image dans laquelle davantage de points d'intérêt sont détectés.
La figure 5 montre une troisième image, dans laquelle les points d'intérêt détectés sont arrangés selon une structure (légèrement ou faiblement structurée).
La figure 6 montre une quatrième image, dans laquelle les points d'intérêts détectés sont arrangés selon un ordre fortement structuré ; i.e. une structure « organisée ».

### Description détaillée

Un aéronef peut désigner une variété de porteurs, notamment un avion, un hélicoptère ou un drone (aéronef télé-piloté)

Plus généralement, l'invention peut s'appliquer à des domaines autres que l'avionique (le terme « aéronef » peut être remplacé par le terme « véhicule », qu'il soit terrestre, aérien ou marin). En effet, l'invention est avantageuse dans tous les contextes critiques (sécurité et sûreté des biens et des personnes) dans lesquels l'évolution physique et donc la perception visuelle est rapide. Par exemple, l'invention est applicable au domaine de la voiture automatisée ou autonome.

Un « objet » (ci-après, dans le contexte aéronautique) désigne un élément manipulable ou manipulé en avionique, comme une piste d'atterrissage, un héliport, un obstacle, une tour de contrôle, un bâtiment, un véhicule terrestre, un autre aéronef, un groupement d'oiseaux, etc.

Un objet peut être fixe et/ou mobile (en permanence ou temporairement), déformable ou indéformable. Un objet peut être connu dans son apparence diurne et/ou nocturne (e.g. piste d'atterrissage dans son apparence diurne ou particulière avec ses feux de signalisation durant la nuit).

Certaines techniques en calculabilité, décidabilité, et complexité algorithmique permettent de détecter parmi des images (considérées comme des ensembles de chiffres) celles qui sont « organisées ».

Ce qui est « complexe » demande beaucoup de mots pour le décrire. Le hasard ne pouvant pas se résumer, il est incompressible et fournit les objets les plus complexes. La « complexité aléatoire » (ou contenu incompressible d'information) d'un objet numérique (texte, image, vidéo, données) est mesurée par la complexité de Chaitin-Kolmogorov. La « complexité structurelle » ou « richesse d'organisation » est évaluée par la profondeur logique de Bennett (temps de calcul). La question de la complexité des algorithmes (classes P, NP, etc.) est un autre sujet qui n'a généralement qu'un sens asymptotique.

Un programme de compression (sans pertes) de données permet *d'évaluer* ces complexités (la complexité ne se mesure pas). La version compressée d'un fichier peut être interprétée comme un court programme engendrant ce fichier. Sa taille ou longueur indique une valeur approchée de la complexité de Chaitin-Kolmogorov. Le temps nécessaire à la décompression du fichier peut être assimilé au temps de calcul pour produire le fichier de départ, et donc à sa profondeur logique selon Bennett.

Ces approches (qu'il convient d'interpréter) ne sont pas utilisées dans le secteur avionique, ou de manière non satisfaisante. Ces notions peuvent être avantageusement appliquées, en combinaison, dans le domaine du traitement d'images.

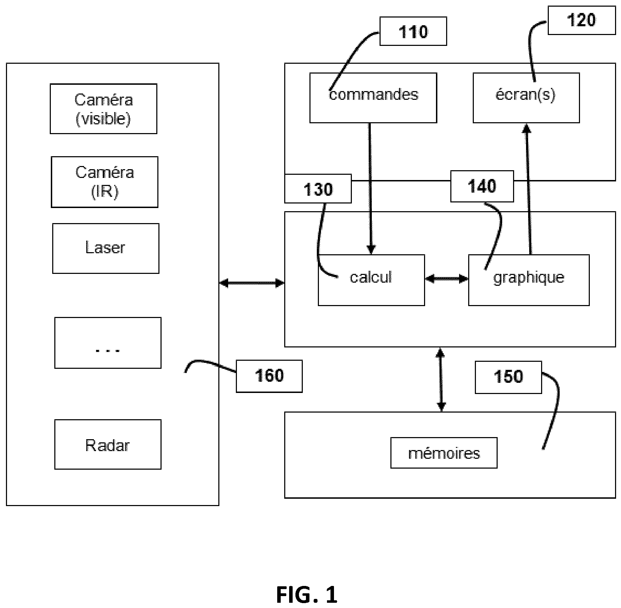

La figure 1 illustre un mode de réalisation de l'invention.

Dans un mode de réalisation le système comprend:
- un ensemble de capteurs (160) qui fournissent des informations numériques, par exemple en temps réel, au module calcul (130); ces capteurs peuvent notamment être des capteurs d'acquisition d'images (embarqués dans l'aéronef, dans les ailes, le cockpit, sous l'avion, derrière, etc et/ou portés par le pilote e.g. visiocasque, installé de manière fixe dans le cockpit ou mouvante par drone autour de l'avion, etc.); les caméras peuvent être en lumière visible, en infrarouge IR, Time-of-Flight TOF, stéréoscopique, etc.
- des ressources de calcul (130), également dénommées « module (de) calcul » par la suite ;
- des ressources graphiques (140), également dénommées « module graphique » ci-après ;

Les ressources de calcul et graphique travaillent généralement en parallèle, ou de concert (liens CPU/GPU), et généralement en « temps réel ». L'expression « temps réel » désigne un système capable de contrôler un procédé physique à une vitesse adaptée à l'évolution du procédé contrôlé. Selon une autre définition, un système temps-réel doit délivrer des résultats exacts dans des délais courts (bornés);
- parmi les écrans embarqués, au moins un écran est dédié au pilote et/ou au copilote (120); l'écran peut être réel et/ou virtuel (réalité augmentée/virtuelle) ; une pluralité d'écrans peut être utilisée (distribution de l'information) ;
- un ou plusieurs périphériques de saisie (110) ou Interface Homme-Machine (IHM), comme un panneau de commande pour le pilotage, ce dernier comportant des écrans, des rotacteurs, des zones tactiles, des boutons etc;
- des ressources en mémoire et/ou de stockage de masse (150) utilisé par les calculateurs embarqués ; des mémoires volatiles et/ou non-volatiles peuvent être utilisées ; le stockage de masse peut se faire sur des disques durs embarqués locaux et/ou accédés à distance.

Les capteurs (160) peuvent notamment servir à analyser l'état courant de l'environnement extérieur à l'aéronef. Selon les types de capteurs utilisés, les informations fournies peuvent être plus ou moins bruitées. Dans certains cas, certains capteurs peuvent être momentanément inopérants pour la détection de certains objets extérieurs. Les capteurs (160) peuvent délivrer en « temps réel » (i.e. dans des temps brefs comparés au phénomène observé) des images numériques aux ressources de calcul (130) ainsi qu'aux ressources de mémoire et/ou de stockage (150).

Les ressources de calcul (130) peuvent comprendre différents éléments, selon les modes de réalisation (e.g. circuits ASIC, FPGA, processeur multi-core ou many-core, « GPU computing », clusters, etc). Les ressources de calcul peuvent être locales (embarquées) et/ou accédées à distance (« Cloud Computing » ou informatique dans les nuages). Dans un mode de réalisation, les ressources de calcul comprennent un ordinateur disposant de bus d'interfaces avec des éléments extérieurs tels que les capteurs (160) et les ressources mémoire (150). Elles permettent de recevoir ou lire rapidement ou en temps réel les données ou images fournies par les capteurs (160), et également de recevoir une ou plusieurs commandes entrées par l'équipage (par exemple via des périphériques de saisie, comme un panneau de commandes (110)).

Dans un mode de réalisation, le(s) processeur(s) de calcul utilisé(s) sont capables de faire des calculs classiques sur des nombres entiers et flottants de 32 bits et/ou 64 bits. Ce module de calcul dispose par ailleurs de mémoires vives volatiles par exemple de type RAM locales dédiées et/ou partagées avec les ressources graphiques (140). Le code (série d'instructions) exécutable peut être stocké sur le module mémoire (150). Le code exécutable de calcul quant à lui peut être stocké dans les ressources de mémoire et/ou de stockage (150).

Les ressources graphiques (140) peuvent notamment comprendre un ou plusieurs calculateurs graphiques (plusieurs GPU peuvent être arrangés en combinaison, e.g. SLI, cluster) configuré pour l'affichage d'images synthétiques 2D et/ou 3D, ainsi que des images vidéo sources en provenance des capteurs.

Les images synthétiques peuvent généralement être calculées (rendues) en temps réel au moyen de primitives graphiques filaires ou surfaciques (e.g. vecteurs, arcs de cercles, alphanumériques, surfaces polygonales). Les attributs de tracés peuvent aussi être disponibles (e.g. épaisseurs de traits, pointillés, couleurs, visibilité). Des transformations photométriques et/ou géométriques de type translation, rotation, homothétie, zoom et projection peuvent être effectuées. Les primitives graphiques, les attributs de tracé ainsi que les transformations géométriques peuvent être paramétrables en temps réel (par exemple au moyen de variables). Le contenu de ces variables peut notamment être modifiable par les ressources de calcul (130).

Le code exécutable peut être stocké sur les ressources de mémoire et/ou de stockage (150). Ces ressources peuvent notamment comporter des moyens de stockage volatils et/ou permanents. Ces ressources peuvent être utilisées en temps réel, en lecture et/ou en écriture par les ressources de calcul.

Dans un mode de réalisation, certaines caractéristiques des capteurs peuvent être stockées (notamment les limites de certains paramètres e.g. angles de vision, résolutions limites, temps de latence, taille des images, débits limites, type information, calages angulaires des axes de visée).

Dans un mode de réalisation, les écrans (120) peuvent par exemple être de type Multi Fonction Display (MFD) en couleurs, éventuellement munis localement d'une commande marche/arrêt ainsi que de réglages de luminosité et de contraste. Alternativement ou en complément, des affichages virtuels (casque VR) et/ou augmentés (casque AR) peuvent être utilisés. Différentes technologies sont envisageables (LED, OLED, pico projecteurs, etc). Dans certains modes de réalisation, la résolution de l'affichage peut être limitée (par exemple 6x6 centimètres ou pouces peuvent suffire). Ces écrans sont pilotés par les ressources graphiques (140).

Les périphériques de saisie, e.g. le panneau de commande (110) peut être « réel » (i.e. physique) et/ou « virtuel » (e.g. réalité augmentée et/ou virtuelle). Dans un mode de réalisation, des boutons à deux états (enfoncé/relâché) peuvent permettent d'activer ou de désactiver un ensemble de fonctions du système. Le système selon l'invention peut en effet être « débrayable ». Dans un mode de réalisation, des potentiomètres peuvent également permettre de faire des réglages fins sur les luminosités, les contrastes des images, etc. Dans certains modes de réalisation, des systèmes de commandes gestuelles peuvent être implémentés (pour la manipulation des images).

Les fonctions principales mises en œuvre par le pilote ou le copilote à partir du panneau de commande comprennent notamment le fait d'initialiser une phase de vol (décollage, approche, croisière...), ou bien encore la possibilité de personnaliser les modes de présentation des alertes.

Dans un mode de réalisation, le procédé pour l'analyse d'une image, comprend les étapes consistant à : recevoir une image depuis un ou plusieurs dispositifs d'acquisition d'images embarqués dans un aéronef; déterminer la complexité algorithmique et/ou la profondeur logique de l'image et/ou d'une pluralité de points d'intérêt déterminés dans l'image; catégoriser l'image et/ou les points d'intérêt selon des niveaux discrets de structuration, d'organisation ou d'ordre.

Dans un mode de réalisation, l'étape consistant déterminer à complexité algorithmique et/ou la profondeur logique de l'image de différents objets (par exemple de l'image dans son entièreté, et/ou des sous-parties de l'image, et/ou d'une pluralité de points d'intérêt e.g. par arrangement combinatoire déterminés dans l'image). Dans un mode de réalisation, le procédé comprend les étapes consistant à : déterminer les taux de compression sans pertes, ligne par ligne et/ou colonne par colonne, de l'image reçue et/ou déterminer les taux de compression sans pertes des coordonnées horizontales et/ou verticales de points d'intérêt ; déterminer la distribution statistique des taux de compression sans pertes ; en fonction des taux de compression et/ou de leur distribution, déterminer un ou plusieurs scores ; catégoriser l'image et/ou les points d'intérêt (et ou des zones d'images) selon des niveaux discrets de structuration, d'organisation ou d'ordre en fonction de l'application d'un ou de plusieurs seuil prédéfinis aux scores déterminés. Dans un mode de réalisation, une image reçue est partitionnée en plusieurs images et chacun peut faire l'objet du traitement selon le procédé décrit.

Dans un mode de réalisation, l'étape consistant à déterminer la complexité algorithmique et/ou la profondeur logique de l'image et/ou d'une pluralité de points d'intérêt déterminés dans l'image, comprend les étapes consistant à : déterminer les taux de compression sans pertes, ligne par ligne ou colonne par colonne, de l'image reçue ; déterminer la distribution statistique des taux de compression sans pertes en calculant les moments statistiques d'ordre 1 à 4 ; en fonction du taux de compression moyen, déterminer un indice global compris entre 0 et 1 caractérisant le niveau aléatoire global de ladite une image. Un indice est un score. Les scores peuvent être additionnés (structuration globale de l'image entière, structuration locale de points d'intérêts),

Dans un mode de réalisation, le procédé comprend les étapes consistant à classer l'image en classes discrétisées selon un ou plusieurs seuils alpha prédéfinis, par exemple: classer l'image comme étant structurée si le taux moyen de compression est supérieur à 4 ; classer l'image comme étant structurée localement si la répartition des taux de compression est asymétrique en fonction des moments statistiques d'ordre 3 et 4, et classer l'image comme étant peu structurée ou inconnue dans les autres cas. La valeur de 4 (alpha 1) pour le taux de compression est empirique. Les moments d'ordre 3 et 4 fouillent dans les propriétés de l'image pour détecter des structures locales.

Dans un mode de réalisation, le procédé comprend en outre une étape consistant à déterminer l'existence d'un ou plusieurs points d'intérêts dans les images. La détermination d'un ou plusieurs points d'intérêts dans les images peut se faire de différentes manières. Dans un mode de réalisation, la détection se fait par analyse de contraste en excès d'un ou de plusieurs seuils prédéfinis. Par exemple, un seuil de 10 peut être choisi sur une échelle de 0 à 255 pour le codage d'un pixel. Cette méthode est très rapide et efficace. Dans d'autres modes de réalisation, la détection peut se faire par analyse de contours (sélectionnés selon des critères précis), par application d'un détecteur de Harris (détection des coins "corners" stables, les points de l'image où le contour change brutalement de direction), analyse de l'image à l'ordre 2 (selon différents opérateurs de dérivation; analyse des DoG "Difference of Gaussians", des LoG "Laplacian of Gaussian" ou des DoH "Difference of Hessians", détection de crêtes ("ridge detection"), etc).

Dans un mode de réalisation, le procédé comprend en outre les étapes consistant à compresser sans pertes les coordonnées horizontales, respectivement verticales, des points d'intérêt ; déterminer les taux de compression horizontaux, respectivement verticaux, des points d'intérêt ;
à partir des taux de compression horizontaux, respectivement verticaux, des points d'intérêt, déterminer un indice-position associée à l'image.

Dans un mode de réalisation, le procédé comprend l'étape consistant à classer les points d'intérêts de manière discrète selon un ou plusieurs seuils beta prédéfinis, par exemple comme étant de position structurée ou aléatoire, en fonction de l'indice- position déterminé. Un indice-position de 0,3 (beta 1) correspond par exemple à une « position aléatoire ». Un indice-position de 0,6 (beta 2) correspond par exemple à une « position structurée ».

Dans un mode de réalisation, le procédé comprend en outre les étapes consistant à : déterminer la distribution statistique des positions géométriques des points d'intérêt en calculant les moments statistiques d'ordre 1 à 4 de ladite distribution; à partir des moments statistiques de la distribution des positions géométriques des points d'intérêt, déterminer un indice-point associée à l'image.

Dans un mode de réalisation, le procédé comprend l'étape consistant à classer les points d'intérêts de manière discrète selon un ou plusieurs seuils gamma prédéfinis, par exemple comme structurés ou comme aléatoires, en fonction de l'indice-point. Un indice-point de 0,3 (gamma 1) correspond par exemple à un « point peu structuré ». Un indice-point de 0,6 (gamma 2) correspond par exemple à un « point structuré ».

Dans un mode de réalisation, le procédé comprend une étape consistant à déterminer la géométrie d'une ou plusieurs zones d'intérêts, lesdites zones d'intérêt étant par exemple déterminées en fonction des indices déterminés comprenant l'indice global, l'indice position et l'indice point. Une somme éventuellement pondérée des indices peut être effectuée (par exemple score global = 1 x indice global + 2 * indice-point + 4* indice position). Une fonction analytique des trois indices est également possible (e.g. quadratique, exponentiation etc...).

Dans un mode de réalisation, le procédé comprend l'étape consistant à calculer le centre de gravité des points d'intérêts déterminés et calculer les limites d'un rectangle englobant des points autour du centre de gravité en excès d'un seuil prédéfini zeta, ledit rectangle indiquant une zone d'intérêt. Dans un mode de réalisation, les limites d'un rectangle englobent au moins 90% des points autour du centre de gravité. Le chiffre de 90 % est empiriquement efficace. Dans d'autres modes de réalisation un ou plusieurs seuils ou plages de seuils zeta peuvent être prédéfinis.

Dans un mode de réalisation, le procédé comprend une étape consistant à afficher un ou plusieurs des éléments comprenant l'image, la catégorie de l'image et/ou des points d'intérêt, un ou plusieurs points d'intérêt, une ou plusieurs zones d'intérêt, sur au moins un écran physique et/ou virtuel. L'affichage est peut notamment être réalisé en temps réel ou à bref délai (comparé au phénomène observé).

Dans un mode de réalisation, le procédé comprend en outre l'étape consistant à recevoir ou déterminer la phase de vol courante, et, en fonction de ladite phase de vol courante, modifier une ou plusieurs valeurs des seuils alpha, beta, gamma et/ou zeta. Les valeurs des indices et/ou des seuils et/ou de leur pondération dans le score final peut dépendre du domaine d'application (e.g. avionique ou conduite automobile).

Dans un mode de réalisation, une ou plusieurs des étapes du procédé sont répétées une ou plusieurs fois, pour une ou plusieurs images reçues postérieurement à une première image. Un flux vidéo peut en effet être accessible. Les calculs portent à chaque fois sur une seule image (intra) mais la multiplication d'images permet l'accumulation d'information (inter), e.g. convergences asymptotiques, confirmations de plus en plus affirmées des points d'intérêts, etc.

Il est décrit un produit programme d'ordinateur, ledit programme d'ordinateur comprenant des instructions de code permettant d'effectuer une ou plusieurs des étapes du procédé, lorsque ledit programme est exécuté sur un ordinateur.

Il est décrit un système comprenant des dispositifs non-avioniques de type sacoche de vol électronique EFB pour la mise en œuvre d'une ou plusieurs étapes du procédé.

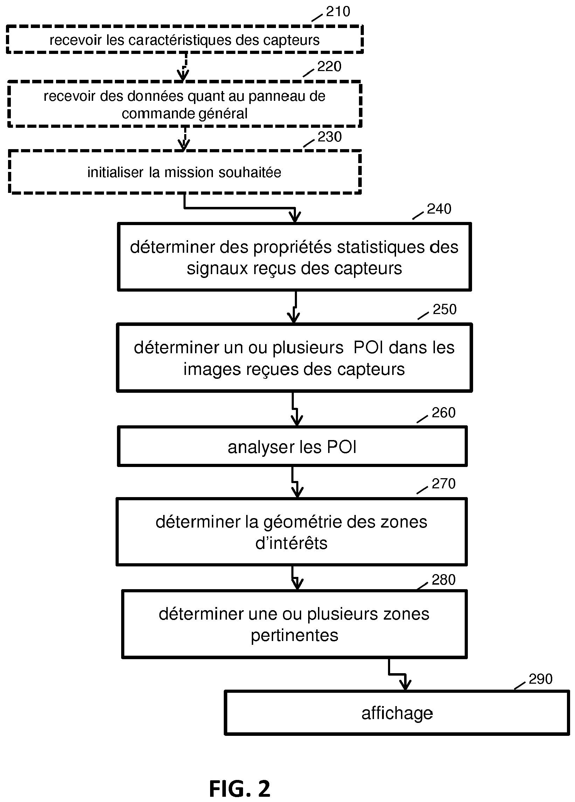

La figure 2 montre des exemples d'étapes du procédé selon l'invention.
Les étapes sont décrites ci-après.

A l'étape 210 (généralement préalable et optionnelle en ce qu'elle ne fait qu'optimiser les calculs en aval), le procédé peut parfois comprendre une étape consistant à recevoir les caractéristiques des capteurs (méta-données):
- le module calcul lit alors dans le module mémoire les caractéristiques des divers capteurs et notamment les limites de certains paramètres ;
- ces paramètres peuvent notamment comprendre la taille des images fournies par les capteurs (nombre de lignes et de colonnes), le type de codage (RGB, niveaux de gris...).

A l'étape 220 (généralement préalable et optionnelle en ce qu'elle ne fait qu'optimiser les calculs en aval), le procédé selon l'invention comprend une étape consistant à recevoir des données, depuis une interface homme-machine, par exemple depuis le panneau de commande général. Le module de calcul lit alors l'état courant de tous les éléments de l'IHM (ex : boutons et potentiomètres) et détermine les options d'initialisation effectivement choisies par l'équipage ainsi que les paramètres numériques associés. Dans un mode de réalisation, une pluralité de boutons poussoirs permettent par exemple de sélectionner la phase de vol courante du porteur (par exemple approche, vol basse altitude...). La phase de vol peut aussi être automatiquement déterminée (à l'aide de capteurs, régime moteur, horaire, altitude, inclinaison, etc). En fonction de la phase de vol courante, la valeur des indices utilisés dans les étapes 240 à 270 ci-dessous est initialisée. Les potentiomètres permettent de régler la luminosité des zones pertinentes sur le(s) écran(s) (280).

A l'étape 230 (généralement préalable et optionnelle en ce qu'elle ne fait qu'optimiser les calculs en aval), le procédé peut comprendre une étape consistant à initialiser la mission souhaitée ainsi que les caractéristiques par défaut associées à celle-ci: le module calcul par exemple peut initialiser les paramètres graphiques et les envoyer vers le module graphique. Le module graphique envoie alors vers le(s) écran(s) pilote une image d'initialisation.

A l'étape 240, le procédé comprend une étape consistant à réaliser les analyses statistiques des informations brutes fournies par les capteurs. Dans un mode de réalisation, pour toutes les informations fournies par les capteurs, le module calcul effectue une analyse d'histogrammes, de moments statistiques d'ordre 1 (moyenne), d'ordre 2 (écart-type ou variance) et 3 (coefficient d'asymétrie), et d'étendue. Une compression non-destructive (i.e. sans pertes) est effectuée sur les données pour mesurer un taux de compression possible. Ces informations sont stockées en mémoire pour utilisation ultérieure. Un indice global entre 0,0 et 1,0 caractérise le niveau aléatoire global de l'image. Le pseudo-code de cette étape peut être le suivant:

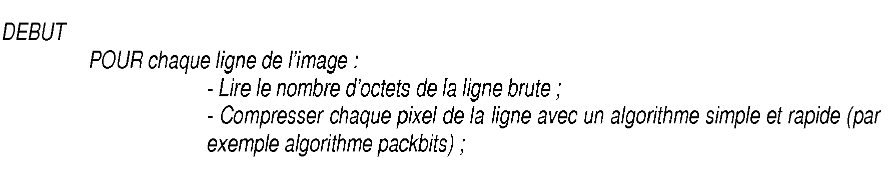

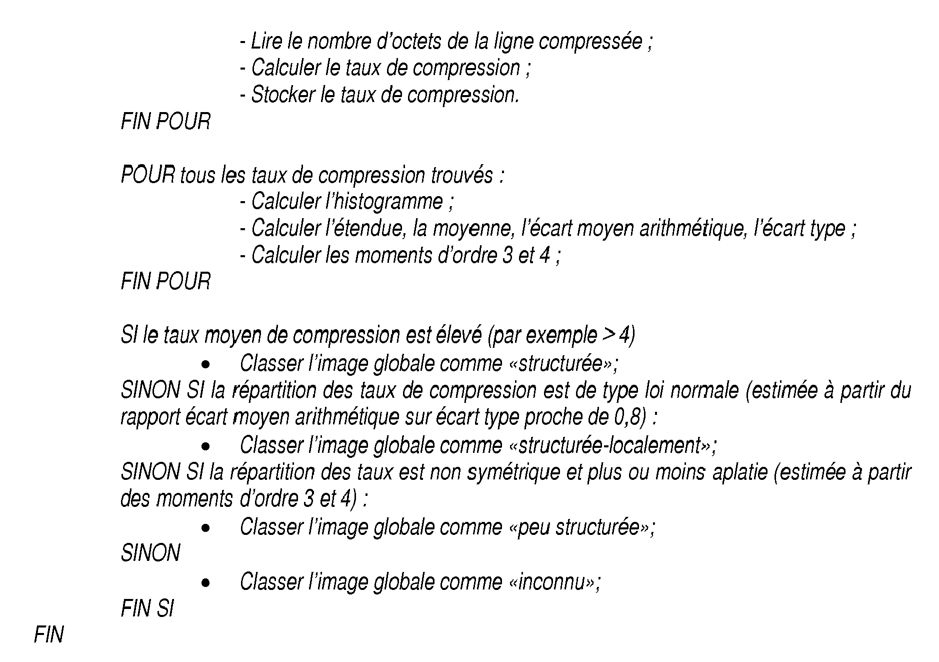

Un indice global de 0 correspond à une image « inconnue »; un indice de 0,3 correspond à une image « peu structurée » ; un indice de 0,6 correspond à une image « structurée localement» ; un indice de 1 correspond à une image « structurée ».

A l'étape 250, le procédé comprend une étape consistant à déterminer les points d'intérêts dans les images. Pour chaque image, divers types de points d'intérêts sont possibles. Une méthode de détermination possible est de type «FAST», qui calcule sur des micro-plages de pixels un point d'intérêt. Dans un mode de réalisation, un point d'intérêt est déterminé si, dans une micro-plage, les contrastes dépassent un certain seuil déterminé lors de l'étape 240. Le pseudo-code de cette étape peut être le suivant:

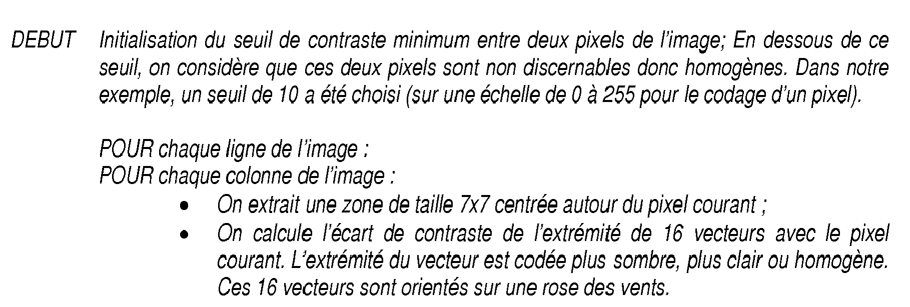

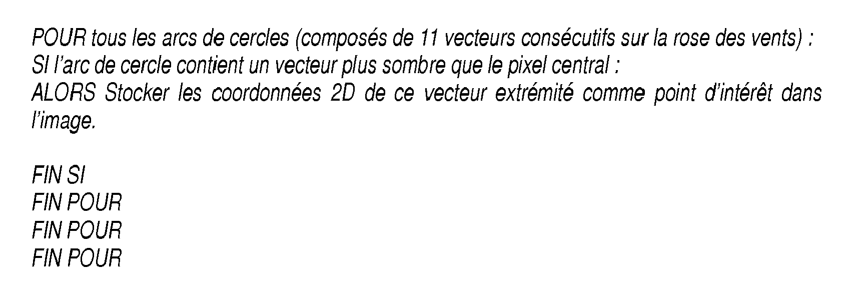

A l'étape 260, le procédé peut comprendre une étape consistant à analyser les points d'intérêts déterminés. Pour l'ensemble des positions géométriques des points d'intérêts, le module calcul effectue une analyse d'histogrammes, de moyennes, de moments statistiques d'ordres 2 à 4, et d'étendue. Un type de fonction aléatoire en est déduit. Une compression *non-destructive* est effectuée sur les données pour mesurer un taux de compression possible. Un indice global entre 0,0 et 1,0 caractérise le niveau aléatoire des points d'intérêts. A partir des indices actuels et des corrélations avec les statistiques trouvées sur des images précédentes, un type d'organisation des points d'intérêts est déduit de manière discrète (« très aléatoire », « légèrement structuré », « organisé »). Ces informations sont stockées en mémoire pour utilisation ultérieure. Le pseudo-code de cette étape peut être le suivant:

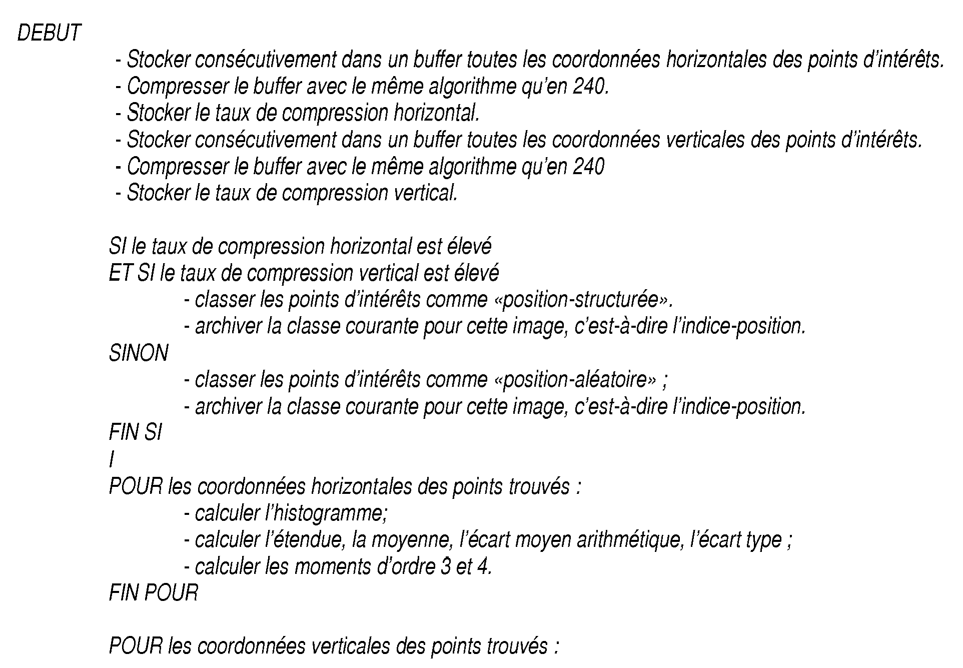

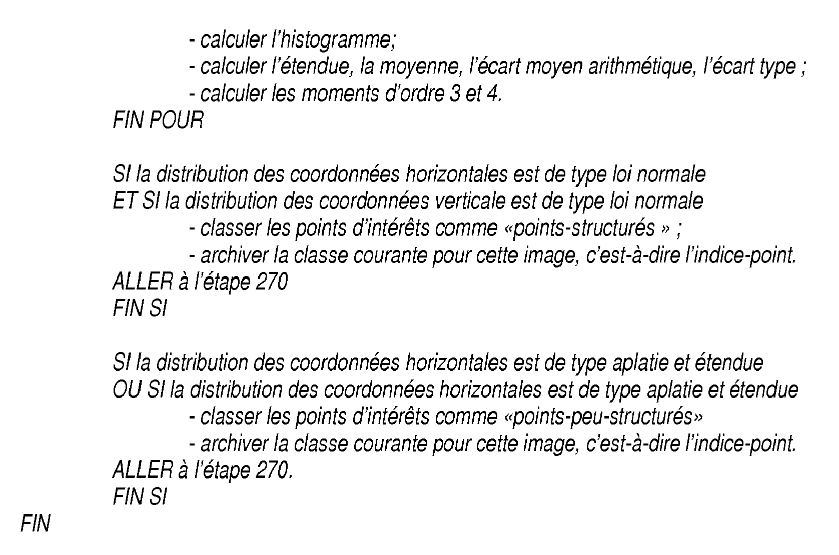

Un indice-position de 0,3 correspond par exemple à une « position aléatoire ». Un indice-position de 0,6 correspond par exemple à une « position structurée ».

Un indice-point de 0,3 correspond par exemple à un « point peu structuré ». Un indice-point de 0,6 correspond par exemple à un « point structuré ».

A l'étape 270, le procédé comprend une étape consistant à déterminer la géométrie des zones d'intérêts.

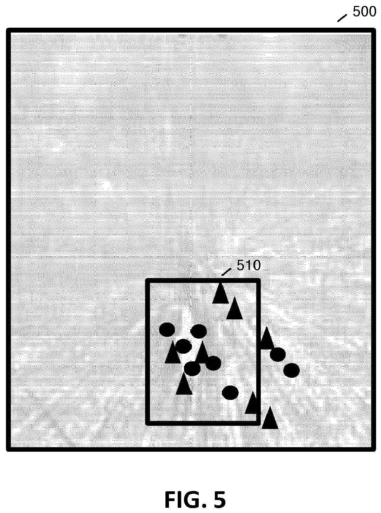

Lorsqu'à l'étape 260, un type d'organisation «légèrement structuré» est trouvé pour au moins un capteur, le module calcul peut trouver, à partir des positions des points d'intérêts, les limites rectangulaires d'une zone pertinente dans l'image. L'exemple d'une zone «légèrement structurée» est fourni à la figure 5. Cette zone pertinente permet de lancer des calculs plus complexes pour interpréter plus finement cette partie de l'image. Le pseudo-code de cette étape peut être le suivant:

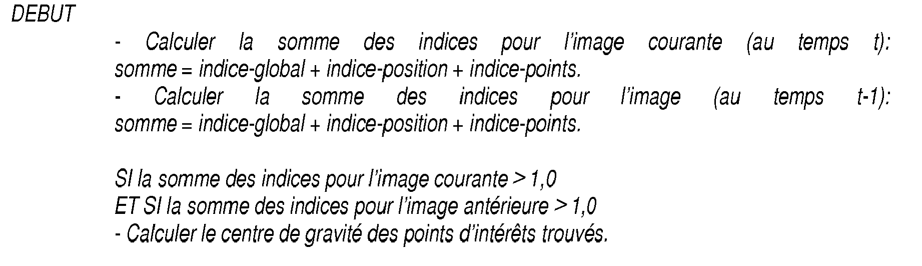

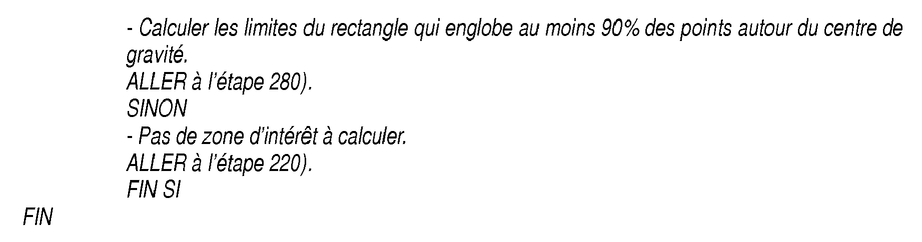

A l'étape 280, le procédé comprend une étape consistant à afficher des zones pertinentes sur le(s) écran(s). Par exemple, sur requête ou commande en provenance du module de calcul (étape 270), le module graphique peut tracer (superposition ou autre) une ou plusieurs zones pertinentes. Dans un mode de réalisation, cet affichage est réalisé dès que possible, afin d'attirer très tôt l'attention du pilote.

Dans un mode de réalisation, une ou plusieurs des étapes précédentes sont effectuées en temps réel sur le calculateur **(130)**

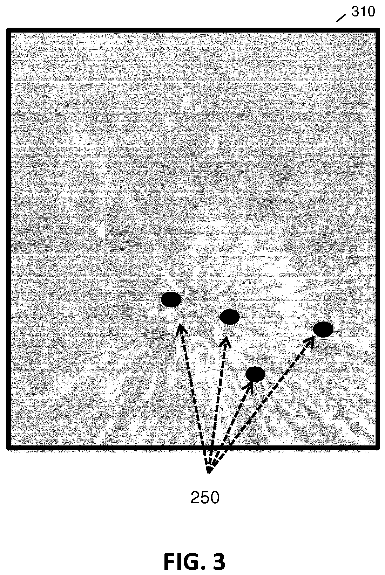

La figure 3 montre une première image dans laquelle plusieurs points d'intérêts ont été détectés. Dans l'exemple qui est fourni, l'aéronef s'approche d'un aéroport lointain. La situation météorologique est très dégradée (mauvaise visibilité, fortes chutes de neige).

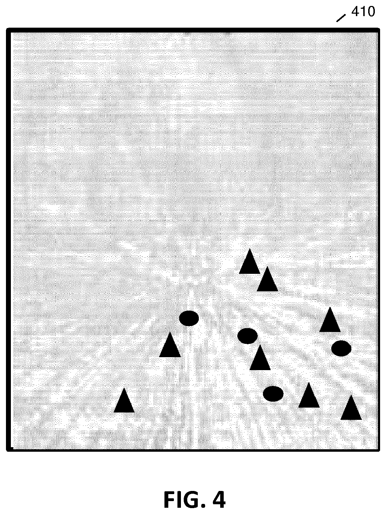

La figure 4 montre une seconde image dans laquelle davantage de points d'intérêts ont été détectés. Dans l'exemple, la piste d'atterrissage commence à prendre forme visuellement.

La figure 5 montre une troisième image 500 montrant le début de la rampe d'approche de la piste. C'est bien une construction humaine avec des règles de constructions aéronautiques: une zone d'intérêt « organisée » 510 est déterminée et affichée.

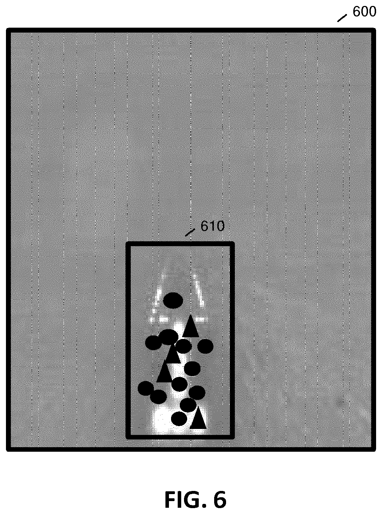

La figure 6 montre une quatrième image 600, encore plus proche de la piste. C'est aussi une zone d'intérêt « organisée ». La piste 610 est bien visible.

Dans un mode de réalisation, l'invention concerne un procédé comprenant les étapes consistant à : déterminer la complexité algorithmique et/ou la profondeur logique d'une image et/ou d'une pluralité de points d'intérêt déterminés dans l'image; et catégoriser l'image et/ou les points d'intérêt selon des niveaux discrets de structuration, d'organisation ou d'ordre (par exemple : aléatoire e.g. nuages, localement structurée e.g. piste en vue, globalement structurée e.g. roulage aéroport) ; éventuellement afficher la catégorie de l'image.

Les calculs de complexité ou de profondeur logique peuvent par exemple comprendre des étapes consistant à compresser *sans pertes* ligne par ligne et/ou colonne par colonne lesdits objets, à déterminer des distributions statistiques des taux de compression de ces objets, à déterminer un ou plusieurs scores en fonction des taux de compression ou de moments statistiques et à catégoriser localement ou globalement une ou plusieurs images reçues. Des développements décrivent des aspects de système et de logiciel.

L'invention peut s'implémenter à partir d'éléments matériel (ASIC et/ou FPGA par exemple) et/ou logiciel. Elle peut être disponible en tant que produit programme d'ordinateur sur un support lisible par ordinateur. Dans une variante de réalisation, une ou plusieurs étapes du procédé selon l'invention sont mises en œuvre sous forme de programme d'ordinateur hébergé sur un ordinateur portable de type « EFB » (Electronic Flight Bag) et/ou au sein d'un calculateur de type FMS (ou dans une fonction FM d'un calculateur de vol).

## Revendications

1. Procédé pour l'analyse d'une image, comprenant les étapes consistant à :
- recevoir une image depuis un ou plusieurs dispositifs d'acquisition d'images embarqués dans un aéronef;
- déterminer la complexité algorithmique et/ou la profondeur logique de l'image et/ou d'une pluralité de points d'intérêt déterminés dans l'image;
- catégoriser l'image et/ou les points d'intérêt selon des niveaux discrets de structuration, d'organisation ou d'ordre ;
l'étape consistant déterminer à complexité algorithmique et/ou la profondeur logique de l'image et/ou d'une pluralité de points d'intérêt déterminés dans l'image, comprenant les étapes consistant à :
- déterminer les taux de compression sans pertes, ligne par ligne et/ou colonne par colonne, de l'image reçue et/ou
- déterminer les taux de compression sans pertes des coordonnées horizontales et/ou verticales des points d'intérêt ;
- déterminer la distribution statistique des taux de compression sans pertes ;
- en fonction des taux de compression et/ou de leur distribution, déterminer un ou plusieurs scores ;
- catégoriser l'image et/ou les points d'intérêt selon des niveaux discrets de structuration, d'organisation ou d'ordre en fonction de l'application d'un ou de plusieurs seuil prédéfinis aux scores déterminés.

2. Procédé selon la revendication 1 , l'étape consistant à déterminer la complexité algorithmique et/ou la profondeur logique de l'image et/ou d'une pluralité de points d'intérêt déterminés dans l'image, comprenant les étapes consistant à :
- déterminer les taux de compression sans pertes, ligne par ligne ou colonne par colonne, de l'image reçue ;
- déterminer la distribution statistique des taux de compression sans pertes en calculant les moments statistiques d'ordre 1 à 4 ;
- en fonction du taux de compression moyen, déterminer un indice global compris entre 0 et 1 caractérisant le niveau aléatoire global de ladite une image.

3. Procédé selon l'une quelconque des revendications 1 à 2, comprenant les étapes consistant à catégoriser ou classer l'image en classes discrétisées selon un ou plusieurs seuils alpha prédéfinis, par exemple:
- classer l'image comme étant structurée si le taux moyen de compression est supérieur à 4 ;
- classer l'image comme étant structurée localement si la répartition des taux de compression est asymétrique en fonction des moments statistiques d'ordre 3 et 4, et
- classer l'image comme étant peu structurée ou inconnue dans les autres cas.

4. Procédé selon l'une quelconque des revendications précédentes comprenant en outre une étape consistant à déterminer l'existence d'un ou plusieurs points d'intérêts dans les images.

5. Procédé selon la revendication 4, comprenant en outre les étapes consistant à :
- compresser sans pertes les coordonnées horizontales, respectivement verticales, des points d'intérêt ;
- déterminer les taux de compression horizontaux, respectivement verticaux, des points d'intérêt ;
- à partir des taux de compression horizontaux, respectivement verticaux, des points d'intérêt, déterminer un indice-position associée à l'image.

6. Procédé selon la revendication 5, comprenant l'étape consistant à classer les points d'intérêts de manière discrète selon un ou plusieurs seuils beta prédéfinis, par exemple comme étant de position structurée ou aléatoire, en fonction de l'indice- position déterminé.

7. Procédé selon l'une quelconque des revendications 4 à 6, comprenant en outre les étapes consistant à :
- déterminer la distribution statistique des positions géométriques des points d'intérêt en calculant les moments statistiques d'ordre 1 à 4 de ladite distribution;
- à partir des moments statistiques de la distribution des positions géométriques des points d'intérêt, déterminer un indice-point associée à l'image.

8. Procédé selon la revendication 7, comprenant l'étape consistant à classer les points d'intérêts de manière discrète selon un ou plusieurs seuils gamma prédéfinis, par exemple comme structurés ou comme aléatoires, en fonction de l'indice-point.

9. Procédé selon l'une quelconque des revendications 3 à 7, comprenant en outre une étape consistant à déterminer la géométrie d'une ou plusieurs zones d'intérêts, lesdites zones d'intérêt étant déterminées en fonction des indices déterminés comprenant l'indice global, l'indice position et l'indice point.

10. Procédé selon l'une quelconque des revendications 4 à 9, comprenant l'étape consistant à calculer le centre de gravité des points d'intérêts déterminés et calculer les limites d'un rectangle englobant des points autour du centre de gravité en excès d'un seuil prédéfini zeta, ledit rectangle indiquant une zone d'intérêt.

11. Procédé selon l'une quelconque des revendications précédentes, comprenant en outre une étape consistant à afficher un ou plusieurs des éléments comprenant l'image, la catégorie de l'image et/ou des points d'intérêt, un ou plusieurs points d'intérêt, une ou plusieurs zones d'intérêt, sur au moins un écran physique et/ou virtuel.

12. Procédé selon l'une quelconques des revendications 3 à 10, comprenant en outre l'étape consistant à recevoir ou déterminer la phase de vol courante, et, en fonction de ladite phase de vol courante, modifier une ou plusieurs valeurs des seuils alpha, beta, gamma et/ou zeta.

13. Procédé consistant à répéter une ou plusieurs des étapes des revendications précédentes pour une ou plusieurs images reçues postérieurement à la première image.

14. Produit programme d'ordinateur, ledit programme d'ordinateur comprenant des instructions de code permettant d'effectuer les étapes du procédé selon l'une quelconque des revendications 1 à 13, lorsque ledit programme est exécuté sur un ordinateur.

15. Système comprenant des dispositifs non-avioniques de type sacoche de vol électronique EFB pour la mise en œuvre des étapes du procédé selon l'une quelconque des revendications 1 à 13.
